# EUROPÄISCHE PATENTANMELDUNG

(11) **EP 0 648 654 A1**
(43) Veröffentlichungstag der Anmeldung: **19.04.1995**
(21) Anmeldenummer: 94111371.4
(22) Anmeldetag: 21.07.1994
(51) Int. Cl.: B60R 25/04

(54) **Sicherungssystem für Fahrzeuge gegen unbefugte Benutzung**

(30) Priorität: 13.10.1993 DE 4335641
(71) Anmelder: DeTeWe FUNKWERK KOPENICK GmbH, D-12557 Berlin (DE)
(72) Erfinder: Drescher, Jürgen, D-12557 Berlin (DE); Richter, Wolf-Dieter, D-10369 Berlin (DE); Saupe, Reinhard, D-12357 Berlin (DE)

(57) **Zusammenfassung**

Ein Sicherungssystem für Fahrzeuge gegen unbefugte Benutzung, insbesondere Kraftfahrzeuge, ist gekennzeichnet durch die Nutzung eines großflächigen Funkrundsteuersystems im Langwellenfrequenzbereich und auf den Antriebsmechanismus wirkende Funkempfangssysteme in den Fahrzeugen, die durch jedem Fahrzeug individuell zugeordnete Funkadressen ansteuerbar sind. Das Funkempfangssystem besteht aus einem Funkempfangsteil, einem Generator und einem Koder. Im Koder ist ein elektronischer Schlüssel gespeichert, der durch den Generator initiiert wird. Dieses Funkempfangssystem ist über eine Schnittstelle (SS) mit dem Dekoder der Antriebssteuerung des Fahrzeuges verbunden.

## Beschreibung

Die Erfindung bezieht sich auf ein Sicherungssystem für Fahrzeuge, insbesondere Kraftfahrzeuge, gegen unbefugte Benutzung.

Es sind verschiedene Sicherungssysteme gegen eine unbefugte Benutzung von Fahrzeugen bekannt, die mechanisch und/oder elektrisch auf die Lenkvorrichtung, das Schaltgetriebe, die Bremsen oder die Steuerung des Antriebes wirken. Diese Sicherungsmaßnahmen sind zum größten Teil durch mehr oder weniger großem Aufwand umgehbar. Sobald solche Sicherungsmaßnahmen ausgeschaltet sind, ist die Benutzung durch Unbefugte möglich.

Der Erfindung lag die Aufgabe zugrunde, auch nach dem Ausschalten bekannter Sicherungsmaßnahmen eine folgende unbefugte Benutzung unterbrechen zu können.

Diese Aufgabe ist durch das vorgeschlagene Sicherungssystem gelöst.

Das Sicherungssystem nutzt ein vorhandenes großflächiges Funkrundsteuersystem, vorzugsweise im Langwellen-Frequenzbereich. Auch andere Funknetze mit anderen Frequenzbereichen sind einsetzbar, erfordern indessen einen größeren technischen Aufwand im Empfangsbereich, vornehmlich bei der Antenne und dem Funkempfänger.

Als großflächiges Funkrundsteuersystem ist beispielsweise das Funkrundsteuer-Sende- und -Empfangssystem von Energie-Versorgungs-Unternehmen einsetzbar.

Das Sicherungssystem bewirkt die Blockierung von Funktionen des Antriebsmechanismusses bzw. dessen elektrische oder elektronische Steuerung durch ein Funksignal. Dabei ist das Funkempfangssystem im Fahrzeug Bestandteil dieses Antriebsmechanismusses.

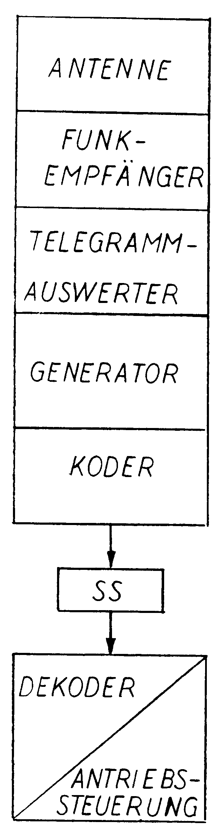

In der Zeichnung ist ein Beispiel eines solchen Sicherungssystems dargestellt. Es ist das Blockschaltbild eines Funkrundsteuer-Empfangssystems für ein Kraftfahrzeug.

Das Funkempfangssystem besteht aus einem Funkempfangsteil, einem Generator und einem Koder. Das Funkempfangsteil setzt sich aus Antenne, Funkempfänger und Telegrammauswerter zusammen. Die konstruktive Einheit aus Funkempfangsteil, Generator und Koder ist derart gestaltet, daß ein Eingrff in das Funkempfangsteil zur Zerstörung des Generators und/oder des Koders führt. Als Antenne ist z.B. eine Stabantenne mit elliptischer Empfangscharakteristik vorgesehen.

Das Funkempfangssystem ist außerhalb elektromagnetischer Abschirmung montiert. Als Teil des Antriebsmechnismusses im Funkempfangssystem dient insbesondere ein im Koder gespeicherter elektronischer Schlüssel. Er wird durch den vorgeschalteten Generator initiiert und über eine Schnittstelle SS an einen Dekoder der Antriebssteuerung geleitet. Bei normaler Benutzung das Fahrzeuges ist damit die Funktion der Antriebssteuerung vom Funkempfangsteil vollkommen unabhängig. Der Generator und der Koder lassen sich außerdem für weitere Sicherungsaufgaben nutzen.

Aus Sicherheitsgründen sind die elektronischen Schlüssel bei den Fahrzeugherstellern und die Funkadressen der Fahrzeuge bei einer Sicherungsbetreibergesellschaft hinterlegt.

Bei unbefugter Fahrzeugbenutzung und autorisierter Aufforderung, z.B. durch die Polizei, wird von der Sicherungsbetreibergesellschaft ein an das spezielle Fahrzeug addressiertes Funktelegramm gesendet. Das Funktelegramm bewirkt das Unterbrechen der Initiierung des elektronischen Schlüssels und ggf. eine Anzeige, wie z.B. "Motor gestört". Nach einer vorgegebenen Zeit wird dann die Antriebssteuerung außer Betrieb gesetzt.

Die erneute Initiierung des elektronischen Schlüssels und damit die Freigabe der Antriebssteuerung, kann nur durch ein weiteres Funktelegramm an das Fahrzeug vorgenommen werden, das eine Rückstellung einleitet.

Das Funkempfangssystem ist theoretisch durch einen Störsender beeinflußbar. Ein solcher Sender ist jedoch problemlos zu lokalisieren.

Eine Unterbrechung der Initiierung der Antriebssteuerung durch im Telegrammauswerter erkannte und fehlerhafte Funktelegramme ist praktisch bei einer Nutzung von Funk-Rundsteuersystemen der Energie-Versorgungs-Unternehmen ausgeschlossen.

Es sei darauf verwiesen, daß das Sicherungssystem nicht nur für Fahrzeuge aller Art, sondern ebenso für andere bewegliche Güter einsetzbar ist.

## Patentansprüche

1. Sicherungssystem für Fahrzeuge, insbesondere Kraftfahrzeuge, gegen unbefugte Benutzung, gekennzeichnet durch die Nutzung eines großflächigen Funkrundsteuersystems und auf den Antriebsmechanismus wirkende Funkempfangssysteme in den Fahrzeugen, die durch jedem Fahrzeug individuell zugeordnete Funkadressen ansteuerbar sind.

2. Sicherungssystem nach Anspruch 1, gekennzeichnet durch die Verwendung von Langwellenfrequenzen für das Funkrundsteuersystem.

3. Sicherungssystem nach Anspruch 1, gekennzeichnet durch ein aus einem Funkempfangsteil, einem Generator und einem Koder bestehendem Funkempfangssystem.

4. Sicherungssystem nach Anspruch 1 und 3, gekennzeichnet durch einem im Koder gespeicherten elektronischen Schlüssel, der durch den Generator initiiert wird.

5. Sicherungssystem nach Anspruch 1 bis 4, gekennzeichnet durch eine dem Ahtriebsmechanismus jedes Fahrzeuges zugeordnete Antriebssteuerung mit einem Dekoder, der über eine Schnittstelle (SS) mit dem Funkempfangssystem verbunden ist.

6. Sicherungssystem nach Anspruch 1 und 3, gekennzeichnet durch ein Funkempfangsteil, bestehend aus einer Antenne, einem Funkempfänger und einem Telegrammauswerter.

7. Sicherungssystem nach Anspruch 6, gekennzeichnet durch eine als Stabantenne mit elliptischer Empfangscharakteristik ausgebildeten Antenne.

8. Sicherungssystem nach Anspruch 1 und 3 bis 8, gekennzeichnet durch eine konstruktive Einheit von Funkempfangsteil, Generator und Koder, derart, daß das Funkempfangsteil oder Teile davon ohne Zerstörung des Generators und/oder des Koders unzugänglich sind.

9. Sicherungssystem nach Anspruch 1 und 3 bis 8, gekennzeichnet durch eine Montage der Funkempfangssysteme außerhalb elektromagnetischer Schirmungen der Fahrzeuge.

10. Sicherungssystem nach Anspruch 1, 3., 4 und 8, gekennzeichnet durch ausschließliches Hinterlegen der Funkadressen bei einer Betreibergesellschaft und der elektronischen Schlüssel der Fahrzeuge bei den Fahrzeugherstellern.
